Europäisches Patentamt

European Patent Office

Office européen des brevets

(11) Publication number: **0 163 957**
**B1**

# EUROPEAN PATENT SPECIFICATION

(45) Date of publication of patent specification: 08.06.88

(51) Int. Cl.⁴: **F 16 L 15/00,** F 16 L 39/00, E 21 B 17/08

(21) Application number: 85105446.0

(22) Date of filing: 17.03.82

(80) Publication number of the earlier application in accordance with Art. 76 EPC: **0 088 817**

(54) Corrosion-resistant pipe coupling structures.

(43) Date of publication of application:
11.12.85 Bulletin 85/50

(45) Publication of the grant of the patent:
08.06.88 Bulletin 88/23

(84) Designated Contracting States:
DE FR GB NL SE

(56) References cited:
DE-A-2 548 195

(73) Proprietor: KAWASAKI JUKOGYO KABUSHIKI KAISHA
1-1 Higashikawasaki-cho 3-chome
Chuo-ku Kobe-shi Hyogo-ken (JP)

(72) Inventor: Yoshida, Toshio
2-23, Rikyumae-Cho 1-Chome Suma-Ku
Kobe-Shi Hyogo-Ken (JP)
Inventor: Itoga, Kouyu
1-462-401, Nakaochiai 4-Chome Suma-Ku
Kobe-Shi Hyogo-Ken (JP)
Inventor: Matsui, Shigetomo
4-25, Higashiyama-Cho
Higashiosaka-Shi Osaka-Fu (JP)
Inventor: Atsuta, Toshio
6-21, Uenomaru 2-Chome
Akashi-shi Hyogo-Ken (JP)

(74) Representative: Klunker, Hans-Friedrich, Dr. et al
Patentanwälte Klunker . Schmitt-Nilson . Hirsch
Winzererstrasse 106
D-8000 München 40 (DE)

Courier Press, Leamington Spa, England.

# Description

This invention relates to a corrosion-resistant pipe structure, and more particularly to a pipe coupling structure used for piping in chemical and other plants, oil and gas pipelines, well tubes, and like piping.

In the piping and pipelines referred to above, multiple-wall composite pipes are used for transporting fluids such as those containing corrosive substances. A typical multiple-wall composite pipe is a dual or double-wall pipe in which the inner wall is a liner tube made of a corrosion-resistant material for effective conducting of corrosive fluid and the outer wall or pipe is designed to provide strength to withstand internal pressures of the corrosive fluid and external forces. For example, there is a double-wall pipe comprising a stainless-steel inner pipe and a carbon-steel outer pipe in which the inner pipe is interference-fitted.

There are certain limitations to the length of such multiple-wall pipes due to restrictions in the manufacture of the pipes and to conditions in which the pipes are installed on site. Therefore, pipe couplings are used to obtain a desired length of piping as is well known in the art. As a matter of course, the pipe couplings are also required to have an internal corrosion resistance as well as a mechanical strength to withstand internal pressures and external forces.

A pipe coupling structure as defined in the precharacterizing portion of the claim is known from GB—A—1 428 433 or US—A—3 870 351.

The radially inner surface of the annular projection is made to have the same diameter as the inner diameter of the two pipes to be coupled whereby a smooth, continuous or uninterrupted cylindrical inner surface is formed from one pipe to the other. This means that the annular projection of the coupling member is exposed to the corrosive fluid or fluids flowing in the pipes.

As a consequence it has been customary to make the coupling member of a corrosion-resistant material such as stainless steel. This gives the coupling sufficient resistance to corrosive fluids but is disadvantageous in that the coupling is very expensive and lacks sufficient strength, thereby resulting in increased thickness and weight and in interference with other elements and devices in and along pipe line.

DD—A—130 591 discloses a pipe coupling structure having a tubular coupling member including on its inner surface an intermediate annular projection the diameter of which is greater than the inner diameter of the two pipes to be coupled. A lining may be provided on the inner surfaces of the pipes, on the actually opposing end parts of the pipes and on the inner surface of the annular projection. However, in contrast to the corrosion-resistant pipe coupling structure defined in the precharacterizing portion of the claim, in this coupling structure the annular projection is not abuttingly interposed between the opposing end parts of the pipes and corrosive fluids may enter into the space between the end parts of the tubes and the annular projection. Applying the linings to said parts involves a plurality of manufacturing steps which renders this prior art structure expensive.

It is an object of the invention to provide a pipe coupling structure, wherein the coupling member has a sufficient strength to withstand internal pressures and external forces and is less expensive, while the intermediate annular projection is resistant to corrosive fluids.

In accordance with the present invention, in a pipe coupling structure defined in the precharacterizing portion of the claim, this object is achieved by the features defined in the characterizing portion of the claim.

The detailed nature, utility, and further features of this invention will be more clearly apparent from the following detailed description when read in conjunction with the accompanying drawings, briefly described below.

Brief Description of the Drawings

FIGS. 1 and 2 are longitudinal sections, explanatory of a method of producing a pipe coupling member used in an embodiment of the invention;

FIG. 3 is a fragmental longitudinal section of the embodiment of the invention and

FIG. 4 is a view similar to FIG. 3 but showing a modification of the embodiment shown in FIG. 3.

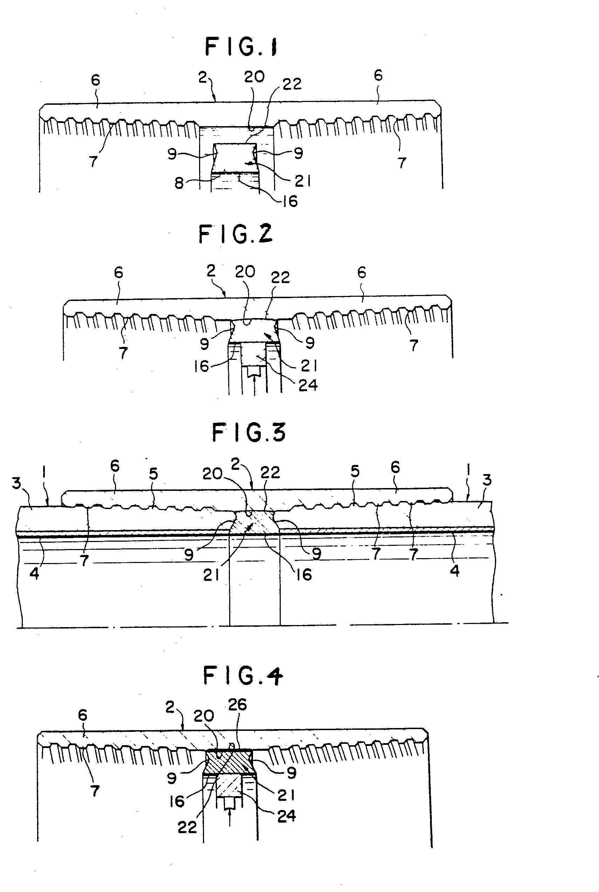

FIGS. 1 and 2 shown an embodiment of the invention.

In this embodiment of the invention, the main body itself of the pipe coupling member 2 is formed with a cylindrical securing surface 20 which does not project radially inward beyond the female screw threads 7 of the coupling member 2, and to which a separately formed annular member 21 made of a corrosion-resistant material such as stainless steel is secured.

The annular member 21 has an outer cylindrical surface 22 and an inner cylindrical surface 16. The annular member 21 has also annular undercut portions 9 at opposite sides thereof so that an annular overhand portion 8 diverging in radially inward direction is formed. The outer cylindrical surface 22 of the annular member 21 is of substantially the same diameter as the securing surface 20. Therefore, when the annular member 21 is placed in the space defined by the securing surface 20, the outer cylindrical surface 22 is in contact with the securing surface 20. After such a condition is obtained, a suitable expanding or chucking device 24 is fitted in the annular member 21 as shown in FIG. 2 to press the cylindrical surface 22 of the annular member 21 against the securing surface 20. Thereafter, beam welding, such as electron beam welding, is carried out along the interface between the surfaces 20 and 22 whereupon the annular member 21 is fixedly secured at the securing surface 20 to the main body of the pipe coupling member. The electron beam welding is carried out, for example, by projecting an electron beam from at least one side of the annular interface between the coupling member 2 and the annular member 21. For this purpose, an electron beam gun is moved along the edge of the annular interface relative to the coupling member and the annular member. The electron beam welding can be replaced by laser beam welding.

When the thus produced pipe coupling member 2 is applied to the pipes 1, a pipe coupling structure as shown in FIG. 3 is obtained. In this structure, the annular undercut portions 9 of the annular member 21 is fluid-tightly abutted against the complementarily shaped end surfaces of the pipes 1, and the inner cylindrical surface 16 of the annular member 21 smoothly connects the inner surfaces of the pipes as shown. It will be noted that the non-corrosion-resistant materials of the outer pipe 3 and the coupling member 2 are thus prevented from being corroded by corrosive fluid flowing in the pipe coupling structure.

The annular member 21 may be secured to the coupling member 2 by an adhesive as indicated at 26 in FIG. 4. Epoxy industrial adhesives are suitable for this purpose. When securing the annular member 21 to the coupling member 2, an adhesive 26 is applied to at least one of the surfaces 20 and 22 and a suitable pressing or chucking device 24 is fitted in the annular member 21 to press the surface 22 firmly against the surface 20.

## Claims

1. A corrosion-resistant pipe coupling structure comprising: a tubular coupling member (2) including an inner surface and axially opposite ends having internal screw threads (7) for engaging male screw threads provided on axially opposing end parts of two pipes (1, 1) to be coupled, the internal surface of each of the pipes being resistant to corrosive fluids, said coupling member (2) including an intermediate annular projection (8) extending radially inwardly from said inner surface be abuttingly engaged by the opposing end parts of the pipes (1, 1), characterized in that said annular projection (8), in full radial extent thereof, compises an annular member (21), the annular member (21) being of a corrosion-resistant material, being a separate member from the coupling member (2), and being secured to the inner surface (20) of the tubular body of the coupling member.

2. A pipe coupling structure according to claim 1, wherein the annular member (21) is welded to the coupling member (2).

3. A pipe coupling structure according to claim 1, wherein the annular member (21) is adhesively secured to the coupling member (2).

4. A pipe coupling structure according to claim 1, 2 or 3, wherein the annular member (21) includes undercut portion (9) on axially opposite sides thereof.

## Patentansprüche

1. Korrosionsbeständige Rohrkupplungsstruktur mit: einem rohrförmigen Kupplungsteil (2), das eine innere Oberfläche und axial entgegengesetzte Enden mit inneren Schraubgewinden zum eingriff mit äußeren Schraubgewinden an axial gegenüberliegenden Endteilen der beiden zu kuppelnden Rohre (1, 1) aufweist, wobei die innere Oberfläche jedes der Rohre beständig gegenüber korrosiven Fluiden ist und wobei das Kupplungsteil (2) einen mittleren ringförmigen Vorsprung (8) aufweist, der sich von der genannten inneren Oberfläche radial nach innen erstreckt, um in anliegenden Eingriff mit den gegenüberliegenden Endbereichen der Rohre (1, 1) zu kommen, dadurch gekennzeichnet, daß der ringförmige Vorsprung (8), in seiner vollen radialen Erstreckung, ein Ringteil (21) aufweist, das aus korrosionsbeständigem Material ist, ein Separatteil von dem Kupplungsteil (2) ist und an der inneren Oberfläche (20) des rohrförmigen Körpers des Kupplungsteils befestigt ist.

2. Rohrkupplungsstruktur nach Anspruch 1, bei der das ringförmige Teil (21) an dem Kupplungsteil (2) angeschweißt ist.

3. Rohrkupplungsstruktur nach Anspruch 1, bei der das ringförmige Teil (21) durch Kleben an dem Kupplungsteil (2) befestigt ist.

4. Rohrkupplungsstruktur nach Anspruch 1, 2 oder 3, bei der das ringförmige Teil (21) an seinen beiden axial entgegengesetzten Seiten einen hinterschnittenen Bereich (9) aufweist.

## Revendications

1. Structure de raccord de tuyaux résistant à la corrosion comprenant: une partie de raccord tubulaire (2) incluant une surface interne et des extrémités axialement opposées portant des filetages internes (7) destinés à recevoir des filetages mâles situés sur les parties d'extrémité axialement opposées de deux tuyaux (1, 1) à raccorder, la surface interne de chacun des tuyaux étant résistante à des fluides corrosifs, cette partie de raccord (2) comprenant une saillie annulaire intermédiaire (8) qui s'étend radialement vers l'intérieur à partir de cette surface intérieure pour venir s'appliquer en bout sur les parties d'extrémité opposées des tuyaux (1, 1), caractérisée en ce que cette saillie annulaire (8) est constituée, dans toute son épaisseur, par une partie annulaire (21), cette partie annulaire (21) étant en matériau noncorrosif, étant une partie séparée de la partie de raccord (2), et étant fixée sur la surface interne (20) du corps tubulaire de la partie de raccord.

2. Structure de raccord de tuyaux suivant la revendication 1, dans laquelle la partie annulaire (21) est soudée sur la partie de raccord (2).

3. Structure de raccord de tuyaux suivant la revendication 1, dans laquelle la partie annulaire (21) est fixée par adhésif sur la partie de raccord (2).

4. Structure de raccord de tuyaux suivant la revendication 1, 2 ou 3, dans laquelle la partie annulaire (21) inclut un dégagement (9) sur ses faces axialement opposées.

# F I G . 1

# F I G . 2

# F I G . 3

# F I G . 4